# EUROPÄISCHE PATENTSCHRIFT

(11) **EP 2 187 092 B1**
(45) Veröffentlichungstag und Bekanntmachung des Hinweises auf die Patenterteilung: **17.07.2013**
(21) Anmeldenummer: 09013780.3
(22) Anmeldetag: 03.11.2009
(51) Int. Cl.: F16H 1/30

(54) **Koaxiales Getriebe**
Coaxial gearbox
Engrenage coaxial

(30) Priorität: 14.11.2008 DE 202008015150 U
(43) Veröffentlichungstag der Anmeldung: 19.05.2010
(73) Patentinhaber: Baumeister, Karlheinz, 72336 Balingen-Ostdorf (DE)
(72) Erfinder: Baumeister, Karlheinz, 72336 Balingen-Ostdorf (DE)
(74) Vertreter: Patentanwälte Westphal, Mussgnug & Partner

(56) Entgegenhaltungen:
- EP-A2- 0 165 231
- AT-U1- 6 828
- DE-C- 720 040
- GB-A- 1 180 431

## Beschreibung

Die Erfindung betrifft ein koaxiales Getriebe gemäß dem Oberbegriff des Anspruchs 1.

Koaxiale Getriebe der eingangs genannten Gattung sind in zahlreichen Ausführungen bekannt. Diese Getriebe weisen ein angetriebenes Rad als Getriebeeingang und ein Abtriebsrad als Getriebeausgang auf, wobei das Antriebsrad und das Abtriebsrad axial fluchtend angeordnet sind. Diese Getriebe sind in der Regel als Untersetzungsgetriebe ausgebildet, so dass das Ausgangsrad gegenüber dem Eingangsrad eine geringere Drehzahl jedoch ein höheres Drehmoment aufweist.

In vielen Anwendungsfällen ist es erwünscht, dass ein Bewegungsantrieb in einem Drehsinn des Antriebsrades übertragen wird, während eine Drehung des angetriebenen Teils im entgegengesetzten Drehsinn z. B. aus Sicherheitsgründen nicht zugelassen werden soll. Eine Möglichkeit hierfür besteht darin, das Getriebe so auszubilden, dass ein Antrieb in dem gewünschten Drehsinn übertragen wird, während das Getriebe im entgegengesetzten Drehsinn eine Selbsthemmung aufweist. Dabei ist eine Selbsthemmung bei den bekannten Getrieben nur dann möglich, wenn das Getriebe mit einer relativ hohen Untersetzung ausgebildet ist. Ist eine solche hohe Untersetzung nicht erwünscht, werden zusätzliche Bremsen eingesetzt, z. B. Elektrobremsen, Schlingfederbremsen oder dergleichen.

Die Drukschrift EP 0 165 231 A2 wird als der nächste Stand der Technik angesehen und offenbart die Merkmale des Oberbegriffs des Anspruchs 1.

Der Erfindung liegt die Aufgabe zu Grunde, ein koaxiales Getriebe der eingangs genannten Gattung zur Verfügung zu stellen, welches auch mit geringer Untersetzung ausgebildet sein kann und eine zuverlässige Bremswirkung bei Drehung gegen die Antriebsrichtung gewährleistet.

Diese Aufgabe wird erfindungsgemäß gelöst durch ein koaxiales Getriebe mit den Merkmalen des Anspruchs 1.

Vorteilhafte Ausführungen der Erfindung sind in den Unteransprüchen angegeben.

Das erfindungsgemäße Getriebe weist ein äußeres Hohlrad auf, in welchem koaxial ein inneres Sonnenrad angeordnet ist. Radial zwischen dem äußeren Hohlrad und dem inneren Sonnenrad ist wenigstens ein Planetenrad angeordnet, welches mit dem Hohlrad und dem Sonnenrad in Zahneingriff steht. Das äußere Hohlrad ist mit einer inneren Schraubenverzahnung ausgebildet, die eine kleine Steigung aufweist. Das innere Sonnenrad weist eine Stirnverzahnung mit vorzugsweise achsparallelen Zähnen auf. Aus Gründen einer symmetrischen Belastung sind in der Regel zwei oder mehr in gleichem Winkelabstand angeordnete Planetenräder vorgesehen. Die Planetenräder sind als ballige schrägverzahnte Stirnräder ausgebildet, wobei die Planetenräder jeweils auf einer Achse drehbar gelagert sind, die windschschief zur Mittelachse des Hohlrades und des Sonnenrades angeordnet ist und unter einem von 90° verschiedenen Winkel zu der Axialebene dieser Mittelachse bzw. zu einer zur Mittelachse senkrechten Ebene verläuft. Die Achsen der Planetenräder sind in einem Träger gelagert, der koaxial zu dem Hohlrad und dem Sonnenrad angeordnet ist und gegenüber diesen drehbar ist.

Das äußere Hohlrad bildet das angetriebene Rad des Getriebes. Die innere Schraubenverzahnung des Hohlrades weist eine so geringe Steigung auf, dass der Antrieb der Planetenräder durch das Hohlrad eine zuverlässige Selbsthemmung aufweist. Bei einem Drehantrieb des Hohlrades kann dieses den Drehantrieb auf die Planetenräder übertragen, während umgekehrt ein Antrieb des Hohlrades durch die Planetenräder auf Grund der Selbsthemmung nicht möglich ist. Die Schraubenverzahnung des Hohlrades kann eingängig oder mehrgängig ausgebildet sein. Je nach der Gangzahl der Schraubenverzahnung bewirkt eine Umdrehung des Hohlrades die Verdrehung des wenigstens einen Planetenrades um einen Zahn oder um eine der Mehrgängigkeit entsprechende Anzahl von Zähnen. Entsprechend dieser Drehung des wenigstens einen Planetenrades, dreht dieses das Sonnenrad um eine entsprechende Zahnzahl der Stirnverzahnung des Sonnenrades. Daraus folgt, dass die Untersetzung des Getriebes von der Zahnzahl der Schrägverzahnung der Planetenräder unabhängig ist und allein durch die Gangzahl der Schraubenverzahnung des Hohlrades und die Zahnzahl der Stirnverzahnung des Sonnenrades bestimmt ist. Die zuverlässige Selbsthemmung wird durch den Zahneingriff von Hohlrad und Planetenrädern bestimmt, während die Untersetzung durch die Gangzahl des Hohlrades und die Zahnzahl des Sonnenrades bestimmt wird. Die Selbsthemmung ist somit von der Untersetzung unabhängig, so dass auch bei einer kleinen Untersetzung eine zuverlässige Selbsthemmung gewährleistet werden kann.

Das Sonnenrad kann dem jeweiligen Anwendungsfall angepasst werden und als Hohlwelle oder als Vollwelle ausgebildet sein.

Während das äußere Hohlrad als angetriebenes Rad des Getriebes dient, kann der Abtrieb unterschiedlich gestaltet sein. Wird das Sonnenrad drehfest gehalten, rollen die von dem Hohlrad angetriebenen Planetenräder auf diesem drehfest gehaltenen Sonnenrad ab, so dass sich der die Planetenräder lagernde Träger um das Sonnenrad dreht und als Abtriebsrad des Getriebes dient. In einer anderen Ausbildung wird der die Planetenräder lagernde Träger drehfest gehalten, so dass die durch das Hohlrad angetriebenen Planetenräder das innere Sonnenrad in Drehung versetzen und dieses Sonnenrad den Abtrieb des Getriebes bildet.

Das erfindungsgemäße Getriebe kann koaxial in einen Antriebsstrang eingesetzt werden. Dieser Antriebsstrang kann sowohl ein motorischer Antrieb als auch ein manueller Verstellantrieb sein. Das Getriebe wird vorzugsweise mit einer geringen Untersetzung, z. B. eine Untersetzung kleiner als 10 ausgebildet, so dass der Bewegungsantrieb durch das in den Antriebsstrang eingesetzte Getriebe nur wenig beeinflusst wird. Umgekehrt bietet das Getriebe auf Grund seiner Selbsthemmung eine Rücklaufbremse, die einfach aufgebaut ist, eine hohe Zuverlässigkeit aufweist und von Störungen, z. B. Stromausfall oder dergleichen unabhängig ist. Dementsprechend eignet sich das erfindungsgemäße Getriebe insbesondere als zuverlässige Rücklaufbremse bei sicherheitsrelevanten Bewegungsantrieben.

Im Folgenden wird die Erfindung anhand von in der Zeichnung dargestellten Ausführungsbeispielen näher erläutert. Es zeigen
- Fig. 1: eine perspektivische Ansicht des koaxialen Getriebes in einer ersten Ausführung,
- Fig. 2: eine axiale Draufsicht auf dieses Getriebe,
- Fig. 3: einen Axialschnitt dieses Getriebes gemäß der Schnittlinie A - A in Figur 2,
- Fig. 4: eine perspektivische Ansicht des Getriebes in einer zweiten Ausführung,
- Fig. 5: ein erstes Anwendungsbeispiel für das Getriebe und
- Fig. 6: ein zweites Anwendungsbeispiel für das Getriebe.

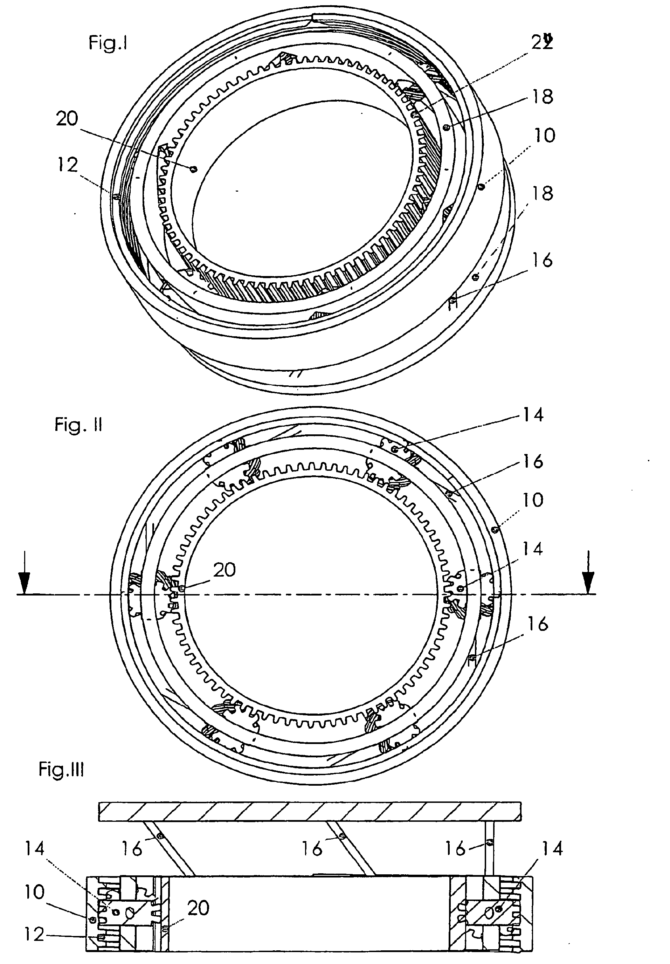

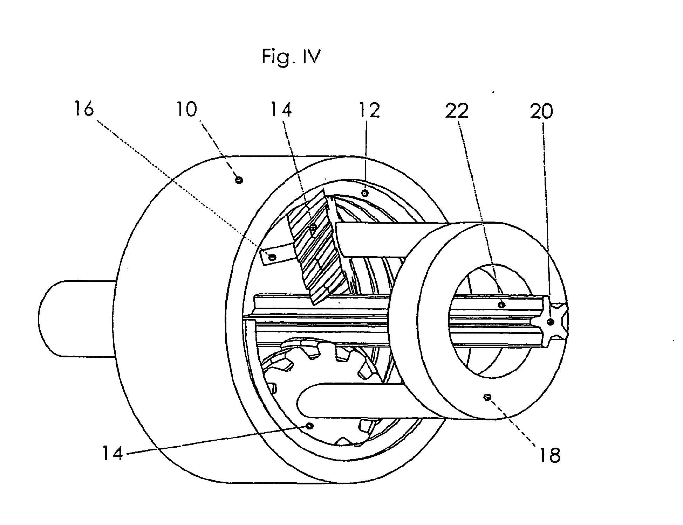

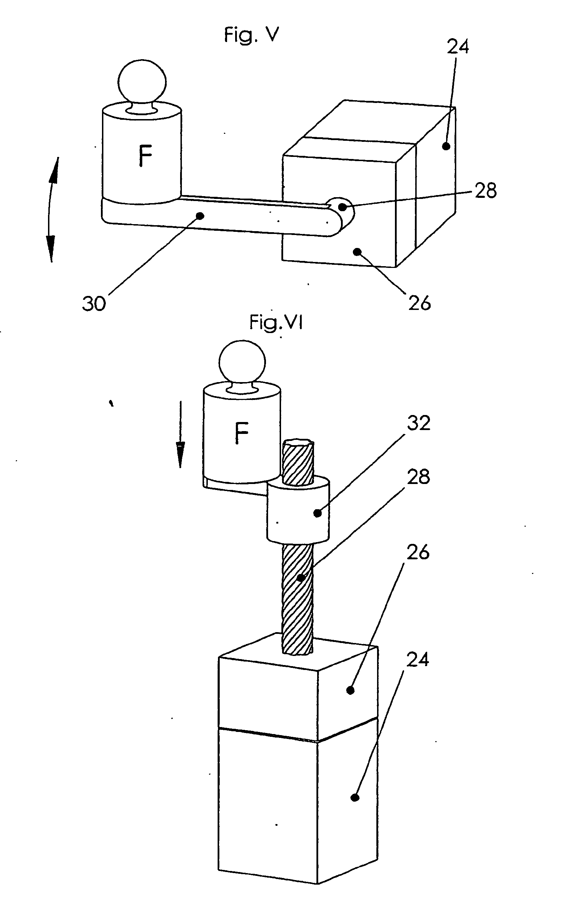

In dem in den Figuren 1 bis 3 dargestellten ersten Ausführungsbeispiel weist das Getriebe ein äußeres Hohlrad 10 auf, welches an seinem Innenumfang mit einer Schraubenverzahnung 12 ausgebildet ist, d. h. mit einer gewindeartig verlaufenden Verzahnung. Die Schraubenverzahnung 12 kann eingängig oder mehrgängig ausgebildet sein. Die Schraubenverzahnung 12 weist eine geringe Steigung, d. h. einen kleinen Steigungswinkel auf.

In die Schraubenverzahnung 12 des Hohlrades 10 greift wenigstens ein Planetenrad 14 ein. In der Regel sind aus Gründen der symmetrischen Belastung wenigsten zwei oder mehr in gleichen Winkelabständen angeordnete Planetenräder 14 vorgesehen. Im Ausführungsbeispiel der Figuren 1 bis 3 sind beispielsweise 6 jeweils in einem Winkelabstand von 60° angeordnete Planetenräder 14 vorgesehen. Die Planetenräder 14 sind als ballige schrägverzahnte Stirnräder ausgebildet. Die Planetenräder 14 sind jeweils auf Achsen 16 in einem Träger 18 drehbar gelagert. Die Achsen 16 sind dabei windschief zu der Mittelachse des Hohlrades 10 angeordnet, d. h. die Achsen 16 verlaufen nicht parallel zu der Mittelachse des Hohlrades 10 und schneiden diese nicht. Mit einer die Mittelachse des Hohlrades 10 enthaltenden Axialebene bzw. mit einer zur Mittelachse des Hohlrades 10 senkrechten Ebene schließen die Achsen 16 dabei einen von 90° verschiedenen Winkel ein. Der Träger 18, der in dem Ausführungsbeispiel als Kreisringscheibe ausgebildet ist, ist um die Mittelachse des Hohlrades 10 frei drehbar gelagert. Auf Grund der balligen Ausführung, der Schrägverzahnung und der windschiefen Drehachse können die Planetenräder 14 mit der Schraubenverzahnung 12 des Hohlrades kämmen, wobei die Verzahnungen vorzugsweise mit einem Trapezprofil ausgebildet sind.

Die geringe Steigung der Schraubenverzahnung 12 und die Ausbildung der Stirnverzahnung der Planetenräder 14 bewirkt, dass bei einem Drehantrieb des Hohlrades 10 die Planetenräder 14 drehangetrieben werden, während umgekehrt bei einem Drehantrieb der Planetenräder 14 Selbsthemmung auftritt.

Koaxial in dem Hohlrad 10 und innerhalb der Planetenräder 14 ist ein Sonnenrad 20 angeordnet, welches in dem Ausführungsbeispiel der Figuren 1 bis 3 als Hohlwelle ausgebildet ist. Das Sonnenrad 20 weist eine Stirnverzahnung 22 auf mit zur Mittelachse achsparallel verlaufenden Zähnen. Die Planetenräder 14 greifen mit ihrer Schrägverzahnung in die Stirnverzahnung 22 des Sonnenrades 20 ein. Die Schrägverzahnung der Planetenräder 14 und die Schrägstellung der Achsen 16 sind so auf die Stirnverzahnung 22 des Sonnenrades 20 abgestimmt, dass ein im Wesentlichen spielfreier Zahneingriff zwischen den Planetenrädern 14 und dem Sonnenrad 20 gewährleistet ist.

In Figur 4 ist eine zweite Ausführung des Getriebes dargestellt, die im Wesentlichen mit der ersten Ausführung der Figuren 1 bis 3 übereinstimmt. Dementsprechend sind dieselben Bezugszahlen verwendet und auf die vorangehende Beschreibung wird Bezug genommen. Im Gegensatz zum Ausführungsbeispiel der Figuren 1 bis 3 ist in der zweiten Ausführung der Figuren 4 das Sonnenrad 20 als Vollwelle ausgebildet. Außerdem sind nur zwei um 180° gegeneinander versetzte Planetenräder 14 vorgesehen. Auch diese Ausführung kann selbstverständlich mit anderen Anzahlen der Planetenräder 14 realisiert werden.

Je nach Verwendungszweck des Getriebes kann das Sonnenrad 20 oder der Träger 18 beim Einbau des Getriebes drehfest gehalten werden. Für eine drehfeste Anordnung des Sonnenrades 20 eignet sich insbesondere das Ausführungsbeispiel der Figuren 1 bis 3, während für eine drehfeste Lagerung des Trägers 18 sich insbesondere die zweite Ausführung der Figur 4 eignet.

Wird das Sonnenrad 20 drehfest gehalten, so rollen bei einem Antrieb des Hohlrades 10 die von diesem in Drehung versetzten Planetenräder 14 auf der Stirnverzahnung 22 des feststehenden Sonnrades 20 ab. Die Planetenräder 14 nehmen dabei den drehbar gelagerten Träger 18 rotatorisch mit, so dass dieser als Abtriebsrad des Getriebes verwendet wird. Wird das Hohlrad 10 rechtsdrehend angetrieben und die Schraubenverzahnung 12 ist als Rechtsgewinde ausgebildet, so ergibt sich die Untersetzung A in diesem Falle als Quotient aus der Gangzahl der Schraubenverzahnung 12 geteilt durch die Differenz von Zähnezahl der Stirnverzahnung 22 minus Gangzahl der Schraubenverzahnung 12. Ist die Schraubenverzahnung 12 beispielsweise eingängig ausgebildet und weist das Sonnenrad 20 fünf Zähne auf, so ergibt sich eine Untersetzung A von 1:(5-1) = 1:4. Bei einer Ausbildung der Schraubenverzahnung 12 als Linksgewinde ergibt sich die Untersetzung A als Quotient aus der Gangzahl der Schraubenverzahnung 12 geteilt durch die Summe von Zähnezahl der Stirnverzahnung 22 und der Gangzahl der Schraubenverzahnung 12. Bei einer eingängigen Schraubenverzahnung 12 und einer Stirnverzahnung 22 mit fünf Zähnen ergibt sich somit die Untersetzung A zu
1: (5+1) = 1:6.

Wird beim Einbau des Getriebes der Träger 18 drehfest gehalten, so wird das Sonnenrad 20 als Abtrieb genutzt. Bei einer Umdrehung des Hohlrades 10 (bei eingängiger Ausbildung der Schraubenverzahnung 12) werden die Planetenträger 14 auf ihren Achsen 16 um einen Zahn gedreht. Dementsprechend wird auch das drehbar gelagerte Sonnenrad 20 um einen Zahn seiner Stirnverzahnung 22 gedreht. Die Untersetzung B ergibt sich dabei als Quotient aus der Gangzahl der Schraubenverzahnung 12 des Hohlrades 10 geteilt durch die Zähnezahl der Stirnverzahnung 22 des Sonnenrades 20. Bei einer Ausbildung der Schraubenverzahnung 12 als Rechtsgewinde ist die Drehrichtung des Sonnenrades 20 gleich der Drehrichtung des Hohlrades 10, während bei einer Ausbildung der Schraubenverzahnung 12 als Linksgewinde die Ausgangsdrehrichtung des Sonnenrades 20 der Drehrichtung des Hohlrades 10 entgegengesetzt ist.

Das erfindungsgemäße Getriebe hat aus der Richtung der Abtriebsseite Selbsthemmung, weil die Planetenräder 14 das Hohlrad 10 wegen des kleinen Steigungswinkels der Schraubenverzahnung 12 nicht antreiben können. Die Untersetzung kann ohne Verlust dieser Selbsthemmung sehr klein gewählt werden, da diese Untersetzung nur von der Zähnezahl der Stirnverzahnung 22 des Sonnenrades 20 und der Gangzahl der Schraubenverzahnung 12 des Hohlrades 10 abhängt.

Die Figuren 5 und 6 zeigen Anwendungsbeispiele des erfindungsgemäßen Getriebes. Ein Motor 24 treibt über das erfindungsgemäße Getriebe eine koaxiale Welle 28 an. In Figur 5 übt die Welle 28 ein Drehmoment aus, welches durch einen Schwenkhebel 30 und eine Last F angedeutet ist. Die Welle 28 überträgt dieses antreibende Drehmoment, während die Selbsthemmung des Getriebes 26 ein Zurückdrehen der Welle durch das von der Last F ausgeübte Drehmoment verhindert. Im Ausführungsbeispiel der Figur 6 ist die Welle 28 als Gewindespindel ausgebildet, die über einen Kugelgewindetrieb 32 eine Last F linear bewegt. Eine Rückwärtsbewegung der Last F wird durch die Selbsthemmung des Getriebes 26 zuverlässig verhindert.

**Bezugszeichenliste**

| | |
|---|---|
| 10 | Hohlrad |
| 12 | Schraubenverzahnung |
| 14 | Planetenräder |
| 16 | Achsen |
| 18 | Träger |
| 20 | Sonnenrad |
| 22 | Stirnverzahnung |
| 24 | Motor |
| 26 | Getriebe |
| 28 | Welle |
| 30 | Schwenkhebel |
| 32 | Kugelgewindetrieb |

## Patentansprüche

1. Koaxiales Getriebe, mit einem äußeren Hohlrad (10), mit einem koaxial in dem Hohlrad (10) angeordneten Sonnenrad (20) und mit wenigstens einem Planetenrad (14), welches zwischen dem Hohlrad (10) und dem Sonnenrad (20) angeordnet ist, welches mit dem Hohlrad (10) einerseits und mit dem Sonnenrad (20) andererseits in Zahneingriff ist und welches in einem bezüglich des Hohlrades (10) und des Sonnenrades (20) koaxial drehbaren Träger (18) um eine Achse (16) drehbar gelagert ist, die zur Mittelachse des Hohlrades (10) windschief ist und mit der Axialebene des Hohlrades (10) einen von 90° verschiedenen Winkel einschließt,
wobei das wenigstens eine Planetenrad (14) als schrägverzahntes Stirnrad ausgebildet ist und wobei das Sonnenrad (20) eine Stirnverzahnung (22) aufweist,
**dadurch gekennzeichnet, dass** das Hohlrad (10) das angetriebene Rad des Getriebes ist, wobei das Hohlrad (10) eine innere Schraubenverzahnung (12) aufweist, dass das wenigstens eine Planetenrad (14) ballig ausgebildet ist und
dass die innere Schraubenverzahnung (12) des Hohlrades (10) eine kleine Steigung aufweist, wodurch bei einem Drehantrieb des Hohlrades (10) das wenigstens eine Planetenrad (14) drehangetrieben wird, während umgekehrt bei einem Drehantrieb des wenigstens einen Plantenrades (14) Selbsthemmung eintritt.

2. Getriebe nach Anspruch 1,
**dadurch gekennzeichnet, dass** die Schraubenverzahnung (12) des Hohlrades (10) eingängig oder mehrgängig ausgebildet ist.

3. Getriebe nach Anspruch 1 oder 2,
**dadurch gekennzeichnet, dass** die Stirnverzahnung (22) des Sonnenrades (20) achsparallel ausgebildet ist.

4. Getriebe nach einem der Ansprüche 1 bis 3,
**dadurch gekennzeichnet, dass** das Sonnenrad (20) als Hohlwelle ausgebildet ist.

5. Getriebe nach einem der Ansprüche 1 bis 3,
**dadurch gekennzeichnet, dass** das Sonnenrad (20) als Vollwelle ausgebildet ist.

6. Getriebe nach einem der Ansprüche 1 bis 5,
**dadurch gekennzeichnet, dass** das Sonnenrad (20) das Abtriebsrad des Getriebes ist und der Träger (18) drehfest gehalten ist.

7. Getriebe nach einem der Ansprüche 1 bis 5,
**dadurch gekennzeichnet, dass** das Sonnenrad (20) drehfest gehalten ist und der Träger (18) das Abtriebsrad des Getriebes ist.

8. Getriebe nach einem der vorhergehenden Ansprüche,
**dadurch gekennzeichnet, dass** die Stirnverzahnung (22) des Sonnenrades (20) weniger als 10 Zähne aufweist.

9. Getriebe nach einem der vorhergehenden Ansprüche,
**dadurch gekennzeichnet, dass** das Getriebe als selbsthemmende Sicherheitsbremse mit einer kleinen Untersetzung des Antriebs ausgebildet ist.

## Claims

1. Coaxial transmission, comprising an outer ring gear (10), a sun gear (20) arranged coaxially in the ring gear (10) and at least one planet gear (14) which is arranged between the ring gear (10) and the sun gear (20), which meshes with the ring gear (10) on the one hand and with the sun gear (20) on the other and which is mounted rotatably about a pivot (16) in a support (18) which can be rotated coaxially with respect to the ring gear (10) and to the sun gear (20), which pivot (16) is skew relative to the centre axis of the ring gear (10) and includes an angle different from 90° with the axial plane of the ring gear (10), the at least one planet gear (14) being configured as a helical spur gear and the sun gear (20) having a spur gearing (22), **characterised in that** the ring gear (10) is the driven gear of the transmission, the ring gear (10) having an inner helical gearing (12), **in that** the at least one planet gear (14) is crowned and **in that** the inner helical gearing (12) of the ring gear (10) has a small gradient, as a result of which, in the case of a rotary drive of the ring gear (10), the at least one planet gear (14) is driven rotationally, whereas conversely in the case of a rotary drive of the at least one planet gear (14), an automatic locking effect occurs.

2. Transmission according to claim 1, **characterised in that** the helical gearing (12) of the ring gear (10) is configured to be single-start or multi-start.

3. Transmission according to claim 1 or claim 2, **characterised in that** the spur gearing (22) of the sun gear (20) is configured to be axially parallel.

4. Transmission according to any one of claims 1 to 3, **characterised in that** the sun gear (20) is configured as a hollow shaft.

5. Transmission according to any one of claims 1 to 3, **characterised in that** the sun gear (20) is configured as a solid shaft.

6. Transmission according to any one of claims 1 to 5, **characterised in that** the sun gear (20) is the driven gear of the transmission and the support (18) is held in a torque-proof manner.

7. Transmission according to any one of claims 1 to 5, **characterised in that** the sun gear (20) is held in a torque-proof manner and the support (18) is the driven gear of the transmission.

8. Transmission according to any one of the preceding claims, **characterised in that** the spur gearing (22) of the sun gear (20) has fewer than ten teeth.

9. Transmission according to any one of the preceding claims, **characterised in that** the transmission is configured as a self-locking safety brake with a small reduction ratio of the drive.

## Revendications

1. Train d'engrenages coaxial comportant une couronne externe (10) une roue solaire (20) montée coaxialement dans la couronne externe (10) et au moins une roue planétaire (14) montée entre la couronne externe (10) et la roue solaire (20), engrainant avec la couronne externe (10) d'une part et avec la roue solaire (20) d'autre part et logée mobile en rotation dans un support (18) mobile en rotation coaxialement à la couronne externe (10) et la roue solaire (20), ce autour d'un axe (16) qui est incliné par rapport à l'axe médian de la couronne externe (10) et définit avec le plan axial de la couronne externe (10) un angle différent de 90°, la roue planétaire (14) étant réalisée sous la forme d'un pignon droit à denture hélicoïdale et la roue solaire (20) comportant une denture droite (22),
**caractérisé en ce que**
la couronne externe (10) est la roue motrice du train d'engrenages, la couronne externe (10) comporte une denture hélicoïdale interne (12), la roue planétaire (14) est bombée, et la denture hélicoïdale interne (12) de la couronne externe (10) comportant un faible pas de sorte qu'en présence d'un entrainement en rotation de la couronne externe (10), la roue planétaire (14) soit entrainée en rotation alors qu'inversement en présence d'un entrainement en rotation de la roue planétaire (14) il se produise un blocage automatique.

2. Train d'engrenages conforme à la revendication 1, **caractérisé en ce que**
la denture hélicoïdale (12) de la couronne externe (10) comporte un filetage unique ou un filetage multiple.

3. Train d'engrenages conforme à la revendication 1 ou 2, **caractérisé en ce que**
la denture droite (22) de la roue solaire (20) est réalisée parallèlement à l'axe.

4. Train d'engrenages conforme à l'une des revendications 1 à 3,
**caractérisé en ce que**
la roue solaire (20) est réalisée sous la forme d'un autre creux.

5. Train d'engrenages conforme à l'une des revendications 1 à 3,
**caractérisé en ce que**
la roue solaire (20) est réalisée sous la forme d'un arbre plein.

6. Train d'engrenages conforme à l'une des revendications 1 à 5,
**caractérisé en ce que**
la roue solaire (20) est la roue de sortie du train d'engrenages et le support (18) est maintenu fixe en rotation.

7. Train d'engrenages conforme à l'une des revendications 1 à 5,
**caractérisé en ce que**
la roue solaire (20) est maintenue fixe en rotation et le support (18) constitue la roue de sortie du train d'engrenages.

8. Train d'engrenages conforme à l'une des revendications précédente,
**caractérisé en ce que**
la denture droite (22) de la roue solaire (20) comporte moins de dix dents.

9. Train d'engrenages conforme à l'une des revendications précédentes,
**caractérisé en ce qu'**
il est réalisé sous la forme d'un frein de sécurité à auto-blocage comportant une faible démultiplication de l'entrainement.
